# FASCICULE DE BREVET EUROPEEN

(11) **EP 0 923 746 B1**
(45) Date de publication et mention de la délivrance du brevet: **14.05.2003**
(21) Numéro de dépôt: 97940199.9
(22) Date de dépôt: 09.09.1997
(51) Int. Cl.: G01V 3/15, G01V 3/38, G01V 15/00

(54) **PROCEDE POUR LA DETECTION, L'IDENTIFICATION ET LE SUIVI D'OBJETS OPTIQUEMENT INVISIBLES**
VERFAHREN FÜR DIE DETEKTION,IDENTIFIZIERUNG UND VERFOLGEN VON UNSICHTBAREN GEGENSTÄNDEN
METHOD FOR DETECTING, IDENTIFYING AND FOLLOWING OPTICALLY INVISIBLE OBJECTS

(30) Priorité: 09.09.1996 FR 9611224
(43) Date de publication de la demande: 23.06.1999
(73) Titulaire: PLYMOUTH FRANCAISE, 69320 Feyzin (FR)
(72) Inventeur: BELLOIR, Fabien, F-51380 Trepail (FR); BUI DUC, Hao, F-69100 Villeurbanne (FR)
(74) Mandataire: Maureau, Philippe
(86) Numéro de dépôt international: FR9701584
(87) Numéro de publication internationale: WO98010313

(56) Documents cités:
- WO-A-92/07286
- WO-A-95/32439
- GB-A- 2 166 872
- US-A- 5 361 628
- POULTON M M ET AL: "LOCATION OF SUBSURFACE TARGETS IN GEOPHYSICAL DATA USING NEURAL NETWORKS" GEOPHYSICS, vol. 57, no. 12, 1 décembre 1992, pages 1534-1544, XP000325374

## Description

La présente invention a pour objet un procédé pour la détection, l'identification et le suivi d'objets optiquement invisibles, notamment des canalisations enterrées.

Il est déjà connu de localiser un conduit enterré à l'aide d'une bande de codage. Cette dernière comporte des éléments détectables par voie électromagnétique, qui sont espacés à intervalles prédéterminés formant ainsi des motifs répétitifs appelés codes. La longueur de chaque élément détectable et la distance entre les éléments détectables donnent une information quant au type du conduit correspondant. La bande de codage se trouve juste au-dessus de la canalisation dont elle est destinée à signaler la présence, ou bien elle peut enrober cette canalisation.

Le brevet français FR-2 667 953 décrit une bande de codage pour permettre l'identification de conduits enterrés et le brevet FR-2 667 952 décrit un dispositif pour la détection et l'identification de conduits enterrés. Le dispositif de détection décrit dans le second brevet peut par exemple être utilisé en combinaison avec la bande de codage révélée par le premier brevet.

L'inconvénient des systèmes connus est qu'il est nécessaire de disposer d'une longueur suffisante pour pouvoir détecter une canalisation. Il est de ce fait souvent difficile, voire impossible, de détecter des canalisations transversales reliant un conduit principal à un utilisateur du réseau. De plus, lorsque deux canalisations se croisent, il est difficile de les distinguer l'une de l'autre.

L'invention a pour but de fournir un procédé permettant d'augmenter les performances des dispositifs de détection et de proposer des dispositifs de codage, qui, en combinaison avec ce nouveau procédé de détection, permettent de détecter et d'identifier des canalisations en ne nécessitant qu'une faible longueur de mesure et de façon fiable, même lorsque des canalisations se croisent.

A cet effet, le procédé qu'elle propose est un procédé pour la détection, l'identification et le suivi de canalisations enterrées ou autres objets optiquement invisibles, à l'aide d'un détecteur et d'un dispositif avertisseur détectable comportant selon un motif prédéterminé des éléments de codage détectables à distance par voie électromagnétique.

Selon l'invention, ce procédé consiste à effectuer un relevé à l'aide d'un générateur d'impulsions associé à un système de mesure de distance permettant de s'affranchir de la vitesse de déplacement de l'opérateur afin d'obtenir un signal à analyser et à reconnaître, à traiter ce signal selon au moins deux techniques différentes choisies parmi la technique de la distance euclidienne, la technique des réseaux de neurones et la technique de la logique floue, à comparer les résultats obtenus par chaque technique utilisée et donner un résultat final en fonction des résultats obtenus par les techniques distinctes utilisées,
la technique de la distance euclidienne consistant à :
- d'une part charger le signal à reconnaître, puis le filtrer et en extraire des paramètres et d'autre part à charger un fichier d'apprentissage obtenu lors d'un apprentissage réalisé avec un minimum de perturbation pour tous les cas de figures correspondant à chaque type de dispositif avertisseur devant être détecté,
- mesurer la distance euclidienne entre les paramètres extraits et ceux des signaux mémorisés dans le fichier apprentissage,
- extraire la plus petite distance euclidienne des mesures effectuées, et
- indiquer à quel élément de codage correspond le signal à reconnaître, la technique des réseaux de neurones consistant à :

- d'une part charger le signal à reconnaître, puis le filtrer, en extraire des composantes, placer ces composantes à l'entrée d'un réseau de neurones et activer ce réseau, et d'autre part charger un fichier d'apprentissage obtenu lors d'un apprentissage réalisé avec un minimum de perturbation pour tous les cas de figures correspondant à chaque type de dispositif avertisseur détectable devant être détecté,
- comparer le neurone dont l'activation est la plus élevée avec le fichier d'apprentissage, et
- déterminer à quel élément de codage correspond le signal à reconnaître, la technique de la logique floue consistant à :

- d'une part charger le signal à reconnaître et en extraire des paramètres, et d'autre part charger un fichier d'apprentissage obtenu lors d'un apprentissage réalisé avec un minimum de perturbation pour tous les cas de figures correspondant à chaque type de dispositif avertisseur détectable devant être détecté et réalisation d'un découpage d'un espace de représentation en plusieurs zones appelées cases, chaque zone étant relative à un code correspondant à un élément de codage,
- calculer le degré d'appartenance des paramètres extraits à chaque case,
- rechercher le maximum de ce degré d'appartenance, et
- déterminer le code associé à la case correspondant à ce maximum.

Ce procédé permet de résoudre le problème qui est à l'origine de l'invention.

Le dispositif de codage proposé par la présente invention comporte un support électriquement isolant sur lequel sont disposés des groupes d'éléments détectables électromagnétiquement actifs. Il est caractérisé en ce que les éléments détectables sont disposés de façon à former des groupes comportant chacun un même nombre d'éléments détectables, chaque groupe étant espacé du groupe voisin d'une distance constante, en ce que la distance séparant deux éléments détectables au sein d'un groupe est constante et en ce que cette dernière distance est sensiblement inférieure à la distance séparant deux groupes d'éléments détectables.

De toute façon, l'invention sera bien comprise à l'aide de la description qui suit, en référence au dessin schématique annexé, illustrant à titre d'exemple non limitatif un procédé selon l'invention et représentant différentes formes d'exécution avantageuses de bandes de codage utilisables lors de la mise en oeuvre du procédé.

D'autres caractéristiques avantageuses du procédé et du dispositif de codage selon l'invention apparaîtront à la lecture de cette description.

Figure 1 est une vue illustrant la détection d'une canalisation par un opérateur,

Figure 2 est un organigramme résumant la technique de la distance euclidienne,

Figure 3 est un organigramme résumant la technique des réseaux de neurones de Kohonen,

Figure 4 est un organigramme résumant la technique de la logique floue,

Figure 5 est un organigramme résumant la technique de classification par fenêtrage,

Figures 6 à 9 représentent diverses configurations avantageuses de bandes de codage ainsi que le signal idéal correspondant à celles-ci.

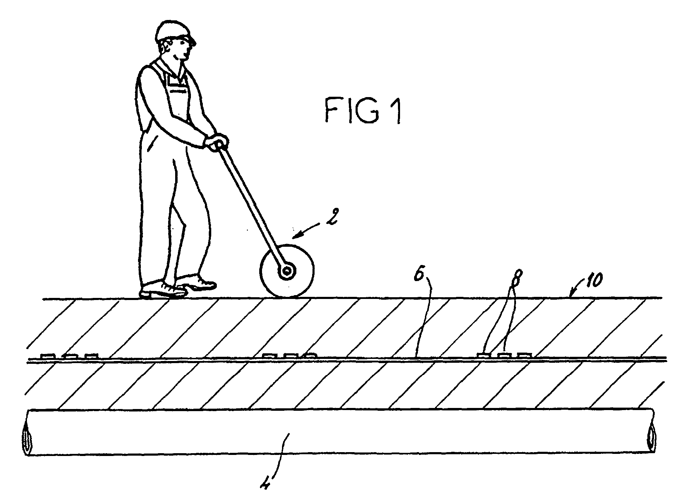

La figure 1 représente un opérateur muni d'un système de détection 2, destiné à identifier une canalisation 4 enterrée. Une bande de codage 6 comportant des éléments 8 de faible épaisseur détectables électromagnétiquement.

Le système de détection 2 comporte un codeur incrémental avantageusement relié à une roue, qui permet au dispositif de rouler sur un sol 10. Ce codeur incrémental fournit un nombre prédéterminé d'impulsions électriques à chaque tour de roue. Ces impulsions permettent d'effectuer des acquisitions à intervalles réguliers.

Ce système de détection 2 permet de s'affranchir de la vitesse de déplacement de l'opérateur et d'obtenir un signal qui est fonction d'une distance parcourue. Il est ainsi plus facile de mesurer la distance séparant des éléments détectables 8 sur la bande de codage 6.

Avant d'enregistrer un signal afin de déterminer la position et la nature d'une canalisation 4 enterrée, des signaux d'apprentissage sont enregistrés dans des conditions les plus idéales possibles, c'est-à-dire avec un minimum de perturbations, en laboratoire par exemple.

Le nombre de types différents de bande de codage 6 pouvant apparaître est limité. Un enregistrement avec chacune de ces bandes 6 est réalisé et mis en mémoire sous la forme d'un code dans un fichier d'apprentissage. Cet enregistrement comporte donc des codes correspondant à des signaux "idéaux", avec très peu de parasites ou de bruit de fond. Le fichier d'apprentissage comporte autant de codes qu'il y a de bandes de codage 6 distinctes à identifier.

Afin de déterminer le type de conduit correspondant à un signal enregistré à reconnaître, ce signal est comparé par différentes techniques aux codes mémorisés de façon à déterminer de quel signal enregistré il est le plus proche. Au moins deux des trois techniques décrites ci-après sont employées. Si les deux résultats obtenus concordent et sont identiques, le résultat est validé. En cas de résultats discordants, la troisième technique est utilisée pour départager les deux résultats.

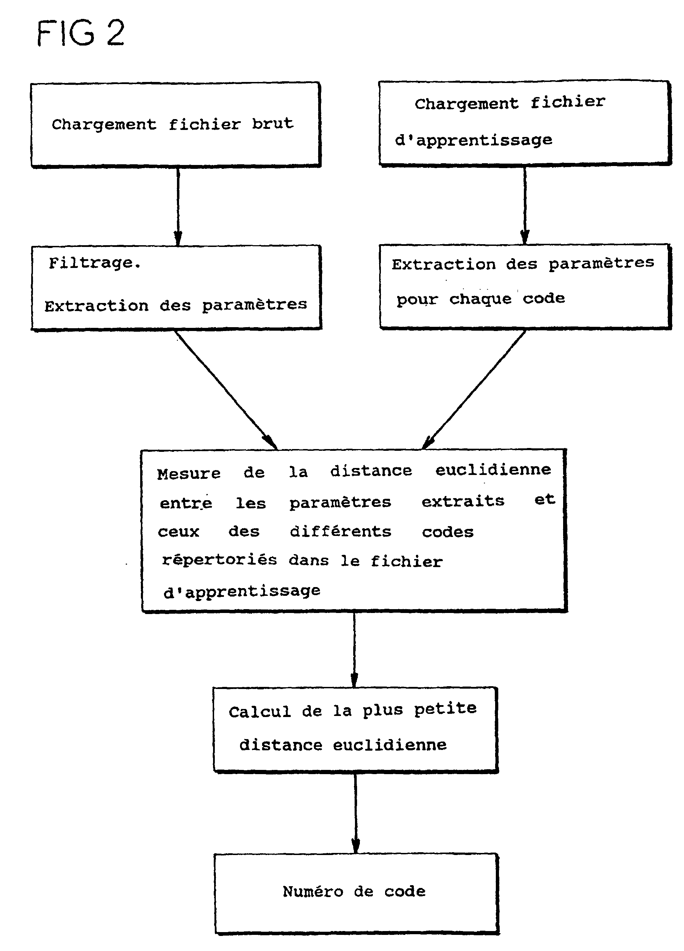

Une première technique est celle de la distance euclidienne. Un organigramme résumant cette technique est représenté à la figure 2.

Le signal à reconnaître est tout d'abord enregistré dans un fichier appelé fichier brut. Pour faciliter les étapes suivantes, ce signal est filtré. Des paramètres, tels par exemple la hauteur des pics du signal, leur demi-hauteur, la surface d'un pic, le rapport de la surface d'un pic avec la surface du pic précédent, la distance séparant deux pics successifs, etc, sont extraits du signal filtré.

D'un autre côté, le fichier d'apprentissage est chargé. Les mêmes paramètres que ceux extraits du signal à reconnaître sont également extraits de chaque code enregistré dans le fichier d'apprentissage.

Pour chaque code du fichier d'apprentissage, la distance euclidienne entre les paramètres de ce code et ceux du signal à reconnaître est mesurée. On obtient ainsi la distance euclidienne du signal à reconnaître à chaque code mémorisé dans le fichier d'apprentissage. Il suffit alors de calculer quelle est la plus petite distance euclidienne pour déterminer de quel code le signal à reconnaître est le plus proche.

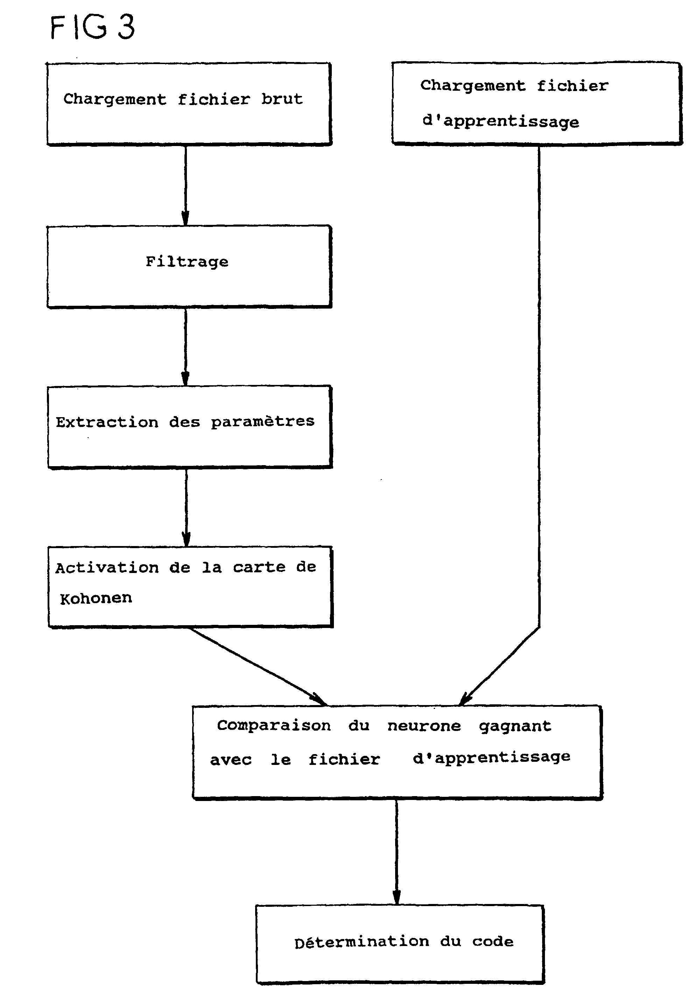

Une seconde technique est celle du réseau de neurones. Un organigramme résumant cette technique est représenté à la figure 3 pour des réseaux de Kohonen. Bien entendu, d'autres réseaux de neurones peuvent être utilisés.

Un espace de dimension prédéterminée, appelé réseau de neurones, ou ici réseau de Kohonen, est défini à partir du fichier d'apprentissage. Ce réseau est divisé en plusieurs classes dans lesquelles se trouvent des points. Des neurones sont placés aléatoirement sur des points du réseau pour obtenir une carte de Kohonen.

Le fichier à reconnaître est enregistré dans un fichier brut. Les données contenues dans ce fichier sont filtrées et des paramètres, du même type que ceux extraits dans la technique de la distance euclidienne, sont extraits de ce fichier. Les paramètres ainsi obtenus sont placés à l'entrée du réseau de Kohonen et activent la carte de Kohonen. Les neurones de ce réseau sont différemment activés par les paramètres d'entrée et le neurone dont l'activation est la plus élevée est appelé neurone gagnant.

Le neurone gagnant est ensuite comparé avec le fichier d'apprentissage. En fonction de la classe de ce neurone gagnant, il est possible de déterminer à quel code le signal à reconnaître est le plus proche.

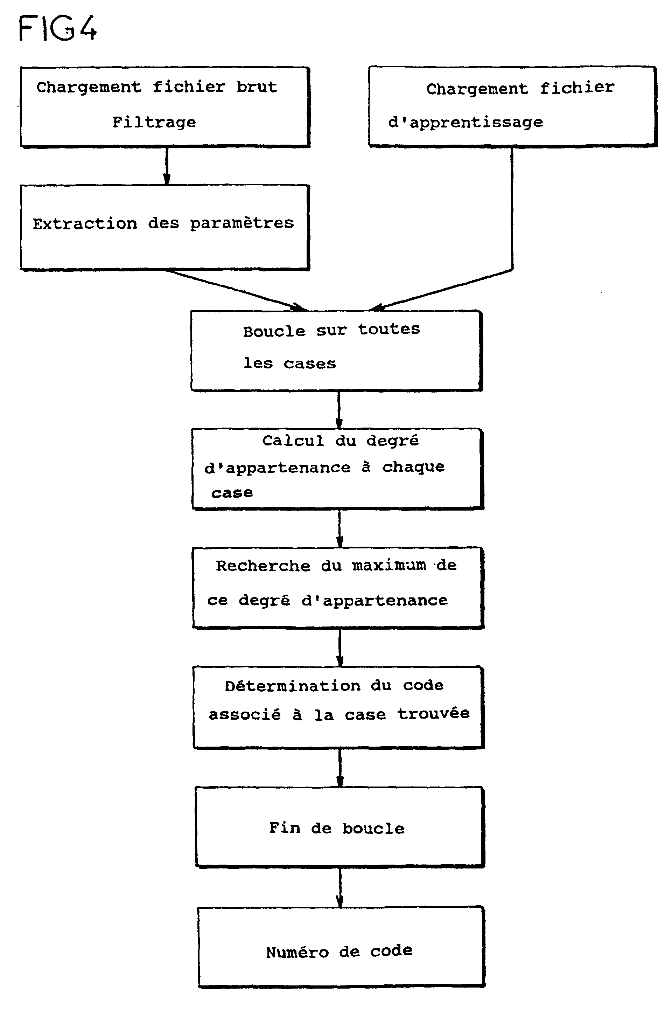

La troisième technique proposée par l'invention est la technique de la logique floue. Un organigramme résumant cette technique est représenté sur la figure 4.

Le fichier à reconnaître est enregistré dans un fichier brut. Les données contenues dans ce fichier sont filtrées et des paramètres, du même type que ceux extraits dans la technique de la distance euclidienne, sont extraits de ce fichier.

Le fichier d'apprentissage est également chargé. Un espace de représentation, obtenu à partir du fichier d'apprentissage, est quadrillé au cours de l'apprentissage de façon à comporter plusieurs zones, ou cases, chacune de celles-ci étant relative à un code.

Pour chacune des cases obtenues, on calcule le degré d'appartenance des paramètres extraits du signal à reconnaître à cette case. Puis on recherche le maximum de ce degré d'appartenance et on détermine le code associé à la case trouvée, pour laquelle le degré d'appartenance est le plus grand.

Chacune des trois techniques décrites ci-dessus permet de déterminer de quel code le signal enregistré à reconnaître est le plus proche. Si les deux premières techniques permettent d'aboutir à un même résultat, ce résultat est validé et on considère que la canalisation enfouie correspond au type indiqué par ce résultat.

Si les deux premiers résultats obtenus sont divergents, une troisième technique est mise en oeuvre en vue de confirmer l'un des deux résultats obtenus. Si le troisième résultat est semblable à l'un des deux résultats obtenus, ce résultat obtenu deux fois est considéré comme étant le bon résultat. Cependant, les trois résultats peuvent être différents l'un de l'autre. Deux alternatives s'offrent alors : refaire une mesure et analyser celle-ci comme la première mesure, ou bien mettre en oeuvre des moyens d'analyse plus puissants.

Cette dernière alternative met alors par exemple en oeuvre un traitement direct du signal pour éliminer les défauts éventuels qu'il contient et à partir de ce signal corrigé, une analyse est menée pour déterminer à quel code correspond ce nouveau signal.

Le signal enregistré sur le terrain comporte souvent des perturbations. Celles-ci proviennent par exemple d'un objet métallique enterré et renvoyant un signal se superposant à celui du code à détecter, ou bien encore d'un défaut survenu dans la pose de la bande de codage 6.

Les trois techniques décrites ci-dessus donnent de très bons résultats lorsque les perturbations enregistrées ne sont pas trop importantes. A partir d'un certain seuil de perturbations, les paramètres pertinents qui sont extraits du signal subissent une modification si importante que les résultats obtenus par ces méthodes deviennent non significatifs.

La technique ci-après traite le signal enregistré lui-même et non plus des paramètres extraits de ce signal. De ce fait, le temps de calcul est plus important. C'est pourquoi, les techniques précédentes sont tout d'abord utilisées et la technique expliquée plus en détail ci-après n'est appliquée que lorsque les techniques précédentes ne peuvent pas donner un résultat satisfaisant.

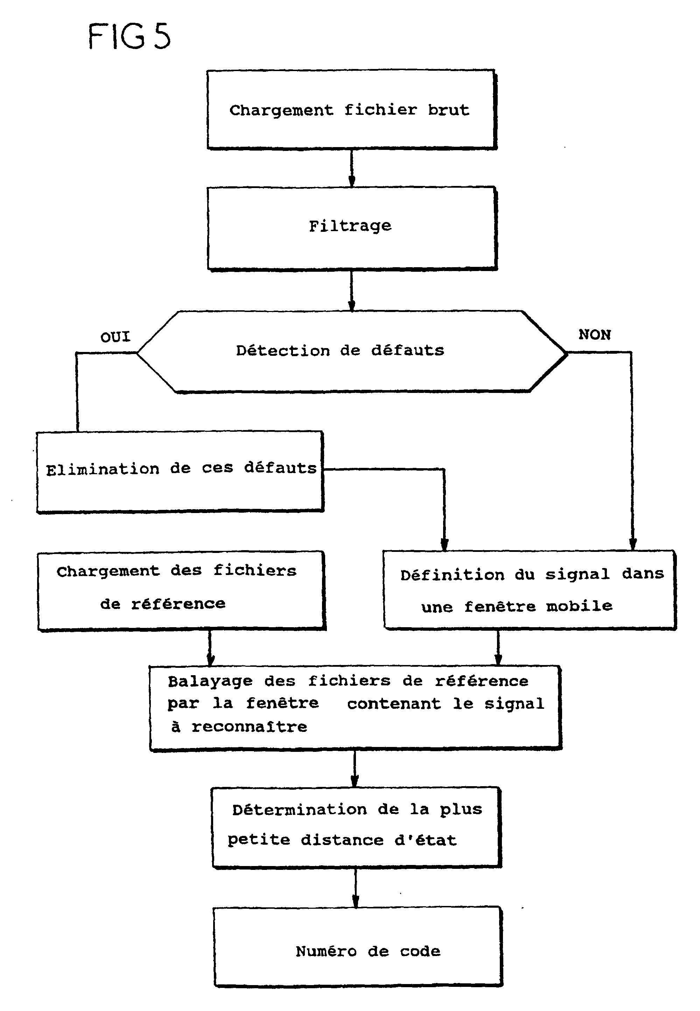

Un organigramme résumant la technique de classification par fenêtrage est représenté à la figure 5.

Le signal à reconnaître, enregistré dans le fichier brut, est tout d'abord filtré. Un programme de détection de défauts est exécuté avec le signal filtré comme donnée d'entrée. Ce programme est basé sur des méthodes de saut de variance, de moyenne et d'écart-type. A partir des résultats donnés par ce programme, il est possible de déterminer si le signal à reconnaître comporte des défauts. Le cas échéant, ces défauts sont éliminés. Cette élimination est réalisée en coupant les zones du signal comportant les défauts relevés.

Si aucun défaut n'a été trouvé, la technique de classification par fenêtrage est poursuivie avec le signal de départ filtré. Sinon, le signal utilisé est le signal tel qu'il se présente après élimination des défauts. Par la suite, le signal à reconnaître est, selon le cas, soit le signal de départ filtré, soit ce même signal après élimination des défauts relevés.

Ce signal à reconnaître est ensuite assimilé à une fenêtre mobile qui se déplace sur des acquisitions de références effectuées de préférence en laboratoire. Ces acquisitions de référence sont relevées de la même manière que le sont les signaux du fichier d'apprentissage, mais elles ont une taille nettement supérieure à celle du signal à reconnaître et une taille supérieure aux codes enregistrés dans le fichier d'apprentissage. Ces acquisitions de référence sont constituées de plusieurs motifs d'un code les uns à la suite des autres et ceci pour tous les codes à détecter. Elles sont stockées dans des fichiers de référence qui sont chargés une fois que le signal à reconnaître est défini.

Ce signal à reconnaître se déplace successivement sur toute la longueur de chaque acquisition de référence, c'est-à-dire sur autant d'acquisitions distinctes qu'il y a de bandes de codage 6 différentes.

Il suffit alors d'appliquer le critère de la distance d'état pour déterminer à quel endroit sur une acquisition donné le signal à reconnaître est le plus semblable. Une fois ce critère appliqué pour toutes les acquisitions de référence, il faut déterminer quelle acquisition de référence est la plus semblable du signal à reconnaître. Une fois que cette acquisition de référence est déterminée, on considère que le conduit sur lequel a été effectué l'enregistrement du signal à reconnaître est du type correspondant à cette acquisition de référence.

Au lieu d'appliquer le critère de la distance d'état, il est possible de choisir un autre critère, tel par exemple le critère de la distance euclidienne, le critère de la corrélation ou bien la technique dite de filtrage adaptatif.

Pour confirmer le résultat obtenu par cette technique de classification par fenêtrage, il est possible de prendre le signal à reconnaître, sans les défauts, et d'appliquer l'une ou plusieurs des trois techniques utilisées ci-dessus, à savoir la technique de la distance euclidienne, celle des réseaux de neurones ou celle de la logique floue.

Cette confirmation est optionnelle car la technique de classification par fenêtrage est la plus puissante de toutes ces techniques. Elle n'est cependant pas utilisée d'emblée, car elle demande un investissement en temps de calcul sensiblement plus important que les autres techniques.

L'intégration de logiciels de reconnaissance nécessaires pour la mise en oeuvre des techniques décrites ci-dessus nécessite l'emploi d'un matériel de détection sophistiqué. Avantageusement, ce matériel comporte un processeur spécialisé dans le traitement de signal, usuellement appelé D.S.P., abréviation de Digital Signal Processing (traitement numérique des signaux).

Pour éviter tout risque de perturbation du détecteur, qui comporte entre autres une tête de détection et une électronique à laquelle est intégrée le processeur D.S.P., le détecteur est équipé avantageusement d'une régulation thermique de l'électronique et la tête de détection est éventuellement munie d'une isolation thermique.

Pour augmenter les performances du dispositif, un système anti-saturation est de préférence prévu afin de diminuer le niveau de sortie du détecteur en présence d'objets métalliques enterrés à faible profondeur.

Les bandes de repérage telles que décrites dans le brevet FR-2 667 953 conviennent parfaitement pour permettre une détection avec le procédé décrit ci-dessus.

Cependant, ce procédé permet d'obtenir des résultats meilleurs, c'est-à-dire reconnaissance facilitée du dispositif avertisseur détectable enterré, reconnaissance de ce dispositif avec un signal à reconnaître relevé sur une courte distance, fiabilité accrue, etc, lorsque ce dispositif avertisseur est une bande de codage 6 réalisée en disposant des éléments électromagnétiquement actifs détectables 8, sur un support protecteur électriquement isolant selon un certain motif. Selon l'invention, les éléments détectables 8 sont disposés en groupes régulièrement espacés présentant chacun un même nombre d'éléments détectables. La distance séparant deux éléments 8 d'un même groupe est constante. Il en est de même pour la distance séparant deux groupes d'éléments détectables 8. Un groupe d'éléments détectables 8 est appelé marqueur.

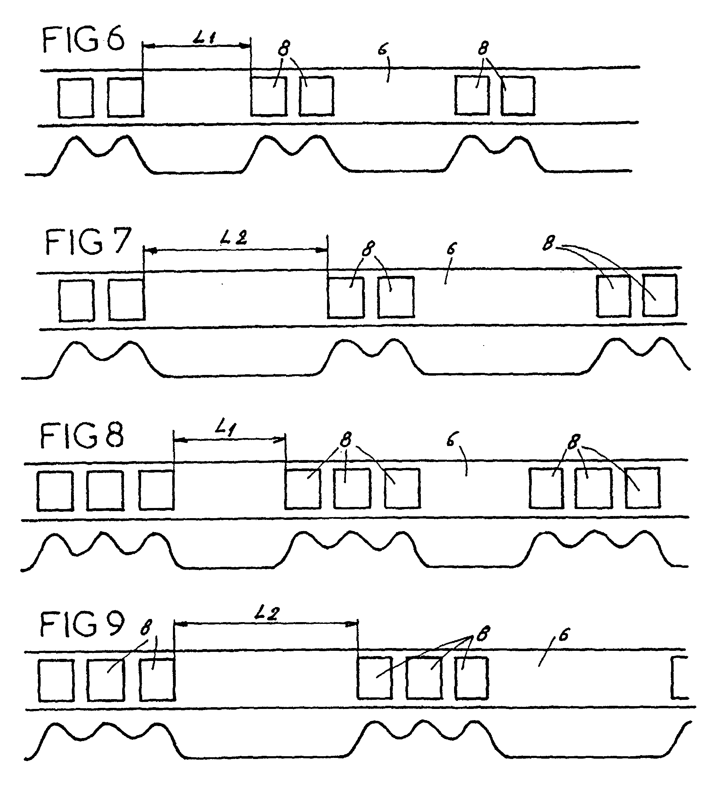

Les figures 6 à 9 montrent quatre exemples de réalisation de bandes de codage 6 selon l'invention. Sur les figures 6 et 7, les groupes d'éléments détectables comportent chacun deux éléments 8 et la distance séparant deux groupes est L1 pour la bande 6 de la figure 6 et L2 pour celle de la figure 7. De même, pour les figures 8 et 9, les marqueurs comportent trois éléments détectables 8 et sont espacés soit de L1 (figure 8), soit de L2 (figure 9).

Ainsi avec deux paramètres, le nombre d'éléments détectables 8 par marqueur et la distance séparant deux marqueurs, il est possible de construire de nombreux types de bandes de codage 6.

Il est préférable toutefois que les longueurs L1 et L2 soient telles que l'une ne soit pas un multiple entier, notamment le double, de l'autre. En effet, si pour quelques raisons que ce soit, le détecteur 2 ne pouvait pas identifier un marqueur, il ne faut pas que la distance déterminée par l'identification du marqueur suivant puisse amener à la reconnaissance d'un autre type de canalisation.

Le signal idéal, ressemblant à celui enregistré dans les fichiers d'apprentissage, pour une bande de codage selon l'invention comporte un plateau avec des maxima relatifs, correspondant chacun à un élément détectable 8, puis un signal nul d'une longueur donnée, puis à nouveau un plateau identique au premier. Ces plateaux définissent un début et/ou une fin de code. On peut ainsi définir des séries de signaux caractérisées par chacune par la longueur du signal nul, et dans chaque série, on peut définir un code en fonction du nombre de maxima relatifs présents pour chaque plateau.

Avec de tels signaux, l'identification est facilitée et le procédé décrit permet d'obtenir d'excellents résultats.

Comme il va de soi, l'invention ne se limite pas aux formes d'exécution décrites ci-dessus à titre d'exemples non limitatifs ; elle en embrasse au contraire toutes les variantes.

Ainsi par exemple, le codeur incrémental associé à une roue pourrait être remplacé par d'autres dispositifs permettant d'obtenir un signal à analyser.

Des impulsions peuvent être par exemple générées par des radio-émetteurs que l'on aura préalablement disposés sur le terrain. Un récepteur intégré à la tête de détection et adapté aux impulsions envoyées reçoit alors ces dernières afin de commander les acquisitions. La validation des acquisitions faites par le récepteur ne se fait que si le détecteur a effectué un déplacement prédéterminé entre deux impulsions. Le système de mesure de la distance parcourue peut par exemple utiliser la technique de la télémétrie laser, la technique G.P.S.(Global Positionnement System ou système de positionnement global) ou d'autres systèmes connus de l'homme du métier.

## Revendications

1. Procédé pour la détection, l'identification et le suivi de canalisations enterrées ou autres objets optiquement invisibles, à l'aide d'un détecteur et d'un dispositif avertisseur détectable comportant selon un motif prédéterminé des éléments de codage détectables à distance par voie électromagnétique, **caractérisé en ce qu'**il consiste à effectuer un relevé à l'aide d'un générateur d'impulsions associé à un système de mesure de distance permettant de s'affranchir de la vitesse de déplacement de l'opérateur afin d'obtenir un signal à analyser et à reconnaître, à traiter ce signal selon au moins deux techniques différentes choisies parmi la technique de la distance euclidienne, la technique des réseaux de neurones et la technique de la logique floue, à comparer les résultats obtenus par chaque technique utilisée et donner un résultat final en fonction des résultats obtenus par les techniques distinctes utilisées, la technique de la distance euclidienne consistant à :
- d'une part charger le signal à reconnaître, puis le filtrer et en extraire des paramètres et d'autre part à charger un fichier d'apprentissage obtenu lors d'un apprentissage réalisé avec un minimum de perturbation pour tous les cas de figures correspondant à chaque type de dispositif avertisseur devant être détecté,
- mesurer la distance euclidienne entre les paramètres extraits et ceux des signaux mémorisés dans le fichier apprentissage,
- extraire la plus petite distance euclidienne des mesures effectuées, et
- indiquer à quel élément de codage correspond le signal à reconnaître, la technique des réseaux de neurones consistant à :
- d'une part charger le signal à reconnaître, puis le filtrer, en extraire des composantes, placer ces composantes à l'entrée d'un réseau de neurones dit de Kohonen et activer ce réseau, et d'autre part charger un fichier d'apprentissage obtenu lors d'un apprentissage réalisé avec un minimum de perturbation pour tous les cas de figures correspondant à chaque type de dispositif avertisseur détectable devant être détecté,
- comparer le neurone dont l'activation est la plus élevée avec le fichier d'apprentissage, et
- déterminer à quel élément de codage correspond le signal à reconnaître, la technique de la logique floue consistant à :
- d'une part charger le signal à reconnaître et en extraire des paramètres, et d'autre part charger un fichier d'apprentissage obtenu lors d'un apprentissage réalisé avec un minimum de perturbation pour tous les cas de figures correspondant à chaque type de dispositif avertisseur détectable devant être détecté et réalisation d'un découpage d'un espace de représentation en plusieurs zones appelées cases, chaque zone étant relative à un code correspondant à un élément de codage,
- calculer le degré d'appartenance des paramètres extraits à chaque case,
- rechercher le maximum de ce degré d'appartenance, et
- déterminer le code associé à la case correspondant à ce maximum.

2. Procédé selon la revendication 1, **caractérisé en ce que** le générateur d'impulsions associé à un système de mesure de distance permettant de s'affranchir de la vitesse de déplacement de l'opérateur est un codeur incrémental relié à une roue, le codeur fournissant un nombre d'impulsions prédéterminé à chaque tour de roue.

3. Procédé selon la revendication 1, **caractérisé en ce que** le générateur d'impulsions associé à un système de mesure de distance permettant de s'affranchir de la vitesse de déplacement de l'opérateur est constitué par une pluralité de radio-émetteurs envoyant des impulsions cadencées, et **en ce que** le détecteur recevant les impulsions ne valide celles-ci que si une distance prédéterminée a été parcourue entre deux impulsions.

4. Procédé selon l'une des revendications 1 à 3, **caractérisé en ce qu'**en outre, le signal à reconnaître est traité selon la technique de la classification par fenêtrage, cette dernière consistant à :
- charger le signal à reconnaître et le filtrer,
- détecter des défauts éventuels de ce signal,
- si un ou plusieurs défauts ont été détectés, éliminer ces défauts,
- assimiler le signal à reconnaître, modifié le cas échéant, à une fenêtre mobile,
- charger des fichiers de référence, chacun d'eux comportant une acquisition de référence obtenue au cours d'un enregistrement réalisé avec un minimum de perturbations pour un cas de figure correspondant à un type de dispositif avertisseur détectable devant être détecté, l'acquisition de référence présentant plusieurs fois le motif prédéterminé caractéristique du dispositif avertisseur correspondant,
- balayer chacune des acquisitions de référence avec la fenêtre contenant le signal à reconnaître,
- déterminer pour chaque acquisition la position de la fenêtre dans laquelle le signal à reconnaître est le plus semblable au motif prédéterminé correspondant, et
- déterminer pour quelle acquisition le signal à reconnaître est le plus semblable au motif prédéterminé correspondant.

5. Procédé selon l'une des revendications 1 à 4, **caractérisé en ce que** le détecteur comporte une électronique intégrant un processeur de traitement numérique de signaux (D.S.P.).

6. Procédé selon l'une des revendications 1 à 5, **caractérisé en ce que** le détecteur comporte une électronique munie d'un dispositif de régulation thermique.

7. Procédé selon l'une des revendications 1 à 6, **caractérisé en ce que** le détecteur comporte une tête de détection munie d'une isolation thermique.

8. Procédé selon l'une des revendications 1 à 7, **caractérisé en ce que** le détecteur comporte une système anti-saturation électronique.

9. Procédé selon l'une des revendications 1 à 8, **caractérisé en ce que** le dispositif avertisseur détectable comporte un support électriquement isolant sur lequel est disposée une succession régulière de groupes d'un même nombre d'éléments détectables électromagnétiquement actifs, la distance séparant deux éléments détectables d'un même groupe étant constante de même que la distance séparant deux groupes voisins et la distance séparant deux éléments détectables d'un même groupe étant sensiblement inférieure à la distance séparant deux groupes.

10. Procédé selon la revendication 9, **caractérisé en ce que**, pour deux dispositifs avertisseurs détectables, la distance séparant deux groupes voisins d'éléments détectables de l'un des dispositifs ne correspond pas à un multiple entier de cette distance de l'autre dispositif.

11. Dispositif de codage pour la mise en oeuvre du procédé selon la revendication 9 ou 10, comportant un support électriquement isolant sur lequel sont disposés des groupes d'éléments détectables électromagnétiquement actifs, **caractérisé en ce que** les éléments détectables sont disposés de façon à former des groupes comportant chacun un même nombre d'éléments détectables, chaque groupe étant espacé du groupe voisin d'une distance constante (L1,L2), **en ce que** la distance séparant deux éléments détectables au sein d'un groupe est constante et **en ce que** cette dernière distance est sensiblement inférieure à la distance (L1,L2) séparant deux groupes d'éléments détectables.

## Patentansprüche

1. Verfahren zum Erfassen, Identifizieren und Verfolgen von unter der Erde verlegten Rohrleitungen oder anderen Objekten, die optisch nicht erkennbar sind, mittels eines Detektors und einer erfassbaren Anzeigevorrichtung, die entsprechend einem vorbestimmten Muster Codierelemente umfasst, die elektromagnetisch aus der Ferne erfassbar sind,
**dadurch gekennzeichnet, dass** es darin besteht, eine Ablesung mittels eines Impulsgenerators durchzuführen, der einem Abstandsmesssystem zugeordnet ist, welches es ermöglicht, unabhängig von der Geschwindigkeit der Fortbewegung des Bedienungspersonals zu arbeiten, um ein zu analysierendes und zu erkennendes Signal zu erhalten, dieses Signal nach mindestens zwei verschiedenen Techniken zu verarbeiten, die aus der euklidischen Distanztechnik, der Neuronennetztechnik und der Fuzzy-Logic-Technik ausgewählt werden, die durch die verwendete Technik erhaltenen Ergebnisse zu vergleichen und ein entgültiges Ergebnis in Abhängigkeit von den durch die verschiedenen verwendeten Techniken erhaltenen Ergebnissen zu geben, wobei die euklidische Distanztechnik darin besteht:
- einerseits das zu erkennende Signal zu laden, es dann zu filtern und Parameter daraus zu extrahieren und andererseits eine Lerndatei zu laden, die bei einem Lernprozess erhalten wurde, der mit einem Minimum an Störgrößen für alle Gestaltungsfälle verwirklicht wurde, und die jedem Typ von zu erfassenden Anzeigevorrichtungen entspricht,
- die euklidische Distanz zwischen den extrahierten Parametern und den Parametern der in der Lerndatei gespeicherten Signale zu messen,
- die geringste euklidische Distanz aus den vorgenommenen Messungen zu extrahieren, und
- anzugeben, welchem Codierelement das zu erkennende Signal entspricht,
wobei die Neuronennetztechnik darin besteht:
- einerseits das zu erkennende Signal zu laden, es dann zu filtern, daraus Komponenten zu extrahieren, diese Komponenten an den Eingang eines Kohonen-Neuronennetzes zu legen und dieses Netz zu aktivieren, und andererseits eine Lerndatei zu laden, die bei einem Lernprozess erhalten wurde, der mit einem Minimum an Störgrößen für alle Gestaltungsfälle verwirklicht wurde, und die jedem Typ von zu erfassendenden erfassbaren Anzeigevorrichtungen entspricht,
- das Neuron, dessen Anregung die höchste ist, mit der Lerndartei zu vergleichen, und
- zu bestimmen, welchem Codierelement das zu erkennende Signal entspricht,
wobei die Fuzzy-Logic-Technik darin besteht,
- einerseits das zu erkennende Signal zu laden und daraus Parameter zu extrahieren und andererseits eine Lerndatei zu laden, die bei einem Lernprozess erhalten wurde, der mit einem Minimum an Störgrößen für alle Gestaltungsfälle verwirklicht wurde, und die jedem Typ von zu erfassendenden erfassbaren Anzeigevorrichtungen entspricht, und Unterteilung eines Repräsentierraumes in verschiedene Bereiche, die Felder genannt werden, wobei jeder Bereich einem Code zugeordnet ist, der einem Codierelement entspricht,
- den Grad der Zugehörigkeit der extrahierten Parameter zu jedem Feld zu berechnen,
- das Maximum dieses Zugehörigkeitsgrades zu suchen, und
- den Code zu bestimmen, der dem Feld zugeordnet ist, dem dieses Maximum entspricht.

2. Verfahren nach Anspruch 1,
**dadurch gekennzeichnet, dass** der Impulsgenerator, der einem Abstandsmesssystem zugeordnet ist, welches es ermöglicht, unabhängig von der Geschwindigkeit der Fortbewegung des Bedienungspersonals zu arbeiten, ein Inkrementalcodierer ist, der mit einem Rad verbunden ist, wobei der Codierer bei jeder Radumdrehung eine vorbestimmte impulsanzahl liefert.

3. Verfahren nach Anspruch 1,
**dadurch gekennzeichnet, dass** der Impulsgenerator, der einem Abstandsmesssystem zugeordnet ist, welches es ermöglicht, unabhängig von der Geschwindigkeit der Fortbewegung des Bedienungspersonals zu arbeiten, von einer Vielzahl von Fernmeldesendern gebildet ist, die kadenzierte Impulse senden,
und dass der die Impulse empfangende Detektor diese nur validiert, wenn eine vorbestimmte Distanz zwischen den beiden Impulsen zurückgelegt wurde.

4. Verfahren nach einem der Ansprüche 1 bis 3,
**dadurch gekennzeichnet, dass** das zu erkennende Signal weiterhin nach der Technik der Fenster-Klassifizierungstechnik verarbeitet wird, die darin besteht:
- das zu erkennende Signal zu laden und es zu filtern,
- die möglichen Fehler dieses Signals zu erfassen,
- wenn ein oder mehrere Fehler aufgefunden wurden, diese Fehler zu beheben,
- das zu erkennende Signal, das gegebenenfalls geändert wurde, in ein bewegliches Fenster zu einzupassen,
- Bezugsdateien zu laden, von denen jede eine Bezugserfassung umfasst, die bei einer Aufzeichnung erhalten wurde, die mit einem Minimum an Störgrößen für einen Gestaltungsfall erhalten wurde, der einem Typ von zu erfassenden erfassbaren Anzeigevorrichtungen entspricht, wobei die Bezugserfassung mehrere Male das vorbestimmte Muster aufweist, das kennzeichnend für die entsprechende Anzeigevorrichtung ist,
- jede Bezugserfassung mit dem das zu erkennende Signal umfassende Fenster abzusuchen,
- für jede Erfassung die Position des Fenster zu bestimmen, in dem das zu erkennende Signal dem entsprechenden vorbestimmten Muster am ähnlichsten ist.
- zu bestimmen, für welche Erfassung das zu erkennende Signal dem entsprechenden vorbestimmten Signal am ähnlichsten ist.

5. Verfahren nach einem der Ansprüche 1 bis 4,
**dadurch gekennzeichnet, dass** der Detektor eine Elektronik umfasst, in der ein Prozessor zum numerischen Verarbeiten der Signale integriert ist (D.S.P.).

6. Verfahren nach einem der Ansprüche 1 bis 5,
**dadurch gekennzeichnet, dass** der Detektor eine Elektronik umfasst, die mit einer Vorrichtung zur Wärmeregelung ausgestattet ist.

7. Verfahren nach einem der Ansprüche 1 bis 6,
**dadurch gekennzeichnet, dass** der Detektor einen Detektierkopf umfasst, der mit einem Wärmeschutz ausgestattet ist.

8. Verfahren nach einem der Ansprüche 1 bis 7,
**dadurch gekennzeichnet, dass** der Detektor ein System zum Schutz vor elektronischer Sättigung umfasst.

9. Verfahren nach einem der Ansprüche 1 bis 8,
**dadurch gekennzeichnet, dass** die erfassbare Anzeigevorrichtung ein elektrisch isolierendes Trägerband umfasst, auf dem Gruppen mit einer gleichen Anzahl von elektromagnetisch erfassbaren aktiven Elementen regelmäßig aufeinanderfolgend vorgesehen sind, wobei der Abstand zwischen zwei erfassbaren Elementen einer gleichen Gruppe konstant ist ebenso wie der Abstand zwischen zwei benachbarten Gruppen und wobei der Abstand zwischen zwei erfassbaren Elementen wesentlich geringer ist als der Abstand zwischen zwei Gruppen.

10. Verfahren nach Anspruch 9,
**dadurch gekennzeichnet, dass** bei zwei erfassbaren Anzeigevorrichtungen der Abstand zwischen zwei benachbarten Gruppen mit erfassbaren Elementen der einen Vorrichtung nicht einem vielfachen Ganzen dieses Abstandes der anderen Vorrichtung entspricht.

11. Codiervorrichtung zum Anwenden des Verfahrens nach Anspruch 9 und 10, umfassend ein elektrisch isolierendes Trägerband, auf dem Gruppen mit elektromagnetisch auffindbaren aktiven Elementen vorgesehen sind,
**dadurch gekennzeichnet, dass** die erfassbaren Elemente so vorgesehen sind, dass sie Gruppen bilden, die jeweils eine gleiche Anzahl von erfassbaren Elementen umfassen, wobei jede Gruppe mit einem kontanten Abstand (L1,L2) von der Nachbargruppe entfernt ist,
dass der Abstand zwischen zwei erfassbaren Elementenen innerhalb einer Gruppe konstant ist und
dass der letztere Abstand wesentlich geringer ist als der Abstand (L1, L2) zwischen zwei Gruppen mit erfassbaren Elementen.

## Claims

1. A procedure for the detection, identification and tracing of buried pipelines or other optically invisible objects, with the aid of a detector and a detectable indicator device comprising coding elements in a predetermined pattern which can be detected at a distance by an electromagnetic route, **characterised in that** it consists of making a survey with the aid of a pulse generator associated with a distance measuring system which is independent of the operator's speed of movement in order to obtain a signal to be analysed and recognised, processing said signal according to at least two different techniques selected from the Euclidean distance technique, the neural network technique and the fuzzy logic technique, comparing the results obtained by each technique used and providing a final result as a function of the results obtained by the different techniques used, the Euclidean distance technique consisting of:
- firstly inputting the signal to be recognised, then filtering it and extracting parameters therefrom, and secondly loading a learning file obtained during a learning procedure effected with a minimum of interference for all scenarios corresponding to each type of indicator device which is to be detected,
- measuring the Euclidean distance between the extracted parameters and those of the signals stored in the learning file,
- extracting the smallest Euclidean distance from the measurements made, and
- indicating the coding element to which the signal to be recognised corresponds,
the neural network technique consisting of:
- firstly inputting the signal to be recognised, then filtering it, extracting components therefrom, placing said components at the input of what is termed a Kohonen neural network and activating said network, and secondly loading a learning file obtained during a learning procedure effected with a minimum of interference for all scenarios corresponding to each type of detectable indicator device which is to be detected,
- comparing the neuron which has the highest activation with the learning file, and
- determining the coding element to which the signal to be recognised corresponds,
the fuzzy logic technique consisting of
- firstly inputting the signal to be recognised and extracting parameters therefrom, and secondly loading a learning file obtained during a learning procedure effected with a minimum of interference for all scenarios corresponding to each type of detectable indicator device to be detected, and breaking down a representation space into a plurality of zones called divisions, each zone being relative to a code corresponding to a coding element,
- calculating the degree of appurtenance of the extracted parameters to each division,
- searching for the maximum of said degree of appurtenance, and
- determining the code associated with the division corresponding to said maximum.

2. A procedure according to claim 1, **characterised in that** the pulse generator which is associated with a distance measurement system which is independent of the operator's speed of movement is an incremental encoder attached to a wheel, said encoder providing a predetermined number of pulses for each turn of the wheel.

3. A procedure according to claim 1, **characterised in that** the pulse generator which is associated with a distance measurement system which is independent of the operator's speed of movement is formed by a plurality of radio emitters which emit clocked pulses, and that the detector which receives the pulses only validates them if a predetermined distance has been covered between two pulses.

4. A procedure according to any one of claims 1 to 3, **characterised in that** the signal to be recognised is processed in addition by the technique of classification by windowing, the latter consisting of:
- inputting the signal to be recognised and filtering it,
- detecting possible defects in said signal,
- if one or more defects have been detected, eliminating said defects,
- assimilating the signal to be recognised, modified if necessary, in a movable window,
- loading reference files, each comprising a reference acquisition obtained during a recording made with a minimum of interference for a scenario corresponding to a type of detectable indicator device to be detected, the reference acquisition comprising a multiple of the predetermined pattern which is characteristic of the corresponding indicator device,
- scanning each of the reference acquisitions with the window containing the signal to be recognised,
- determining, for each acquisition, the position of the window in which the signal to be recognised is the most similar to the corresponding predetermined pattern, and
- determining for which acquisition the signal to be recognised is the most similar to the corresponding predetermined pattern.

5. A procedure according to any one of claims 1 to 4, **characterised in that** the detector comprises electronics which incorporate a digital signal processor (D.S.P.).

6. A procedure according to any one of claims 1 to 5, **characterised in that** the detector comprises electronics provided with a temperature control device.

7. A procedure according to any one of claims 1 to 6, **characterised in that** the detector comprises a detector head provided with thermal insulation.

8. A procedure according to any one of claims 1 to 7, **characterised in that** the detector comprises an electronic anti-saturation system.

9. A procedure according to any one of claims 1 to 8, **characterised in that** the detectable indicator device comprises an electrically insulating support on which is disposed a regular succession of groups of the same number of electromagnetically active detectable elements, the distance separating two detectable elements of the same group being constant, and the distance separating two neighbouring groups and the distance separating two detectable elements of the same group being substantially less than the distance separating two groups.

10. A procedure according to claim 9, **characterised in that**, for two detectable indicator devices, the distance separating two neighbouring groups of detectable elements of one of the devices does not correspond to an integral multiple of this distance for the other device.

11. A coding device for carrying out the procedure according to claim 9 and 10, comprising an electrically insulating support on which are disposed groups of electromagnetically active detectable elements, **characterised in that** the detectable elements are disposed so as to form groups which each comprise the same number of detectable elements, each group being spaced from the neighbouring group by a constant distance (L1, L2), that the distance separating two detectable elements within a group is constant and that the latter distance is substantially less than the distance (L1, L2) separating two groups of detectable elements.
